(19) Europäisches Patentamt

European Patent Office

Office européen des brevets

(11) **EP 1 726 500 A1**

(12) **DEMANDE DE BREVET EUROPEEN**

(43) Date de publication:
**29.11.2006 Bulletin 2006/48**

(51) Int Cl.:
*B60T 13/74* (2006.01)       *B60T 7/10* (2006.01)
*B60T 11/04* (2006.01)

(21) Numéro de dépôt: **06300467.5**

(22) Date de dépôt: **12.05.2006**

(84) Etats contractants désignés:
**AT BE BG CH CY CZ DE DK EE ES FI FR GB GR
HU IE IS IT LI LT LU LV MC NL PL PT RO SE SI
SK TR**
Etats d'extension désignés:
**AL BA HR MK YU**

(30) Priorité: **27.05.2005 FR 0505385**

(71) Demandeur: **Peugeot Citroen Automobiles SA
78943 Vélizy-Villacoublay Cedex (FR)**

(72) Inventeur: **Bez, Simon
92160, ANTONY (FR)**

(54) **Dispositif électrique de freinage de stationnement pour véhicule automobile**

(57)    Ce dispositif comprend un organe d'actionnement (110) d'au moins un câble de commande (112) d'au moins un frein de ce véhicule, ainsi qu'un moteur électrique (104) d'entraînement en translation de cet organe d'actionnement, selon deux sens opposés correspondant respectivement à une mise en tension et à une détente du ou de chaque câble.

Ce dispositif comprend en outre des moyens (114, 116) de fourniture d'énergie, propres à fournir de l'énergie à l'organe d'actionnement (110) lors de la phase de mise en tension.

*Fig.5*

EP 1 726 500 A1

**Description**

La présente invention concerne un dispositif électrique de freinage de stationnement pour véhicule automobile, ainsi qu'un véhicule automobile pourvu d'un tel dispositif électrique de freinage de stationnement.

De manière classique, comme cela est par exemple connu de FR-A-2 848 970, un tel dispositif comprend tout d'abord un moteur électrique, le plus souvent associé à un réducteur. Ce moteur est propre à entraîner en rotation une vis sans fin, qui induit le déplacement en translation d'un écrou. Ce dernier, qui peut être associé à un palonnier de répartition des efforts, assure l'actionnement d'au moins un câble, dont chacun est destiné à la commande d'un frein correspondant du véhicule.

En phase de serrage, le moteur et son éventuel réducteur doivent fournir l'énergie nécessaire pour tirer sur le câble précité, relié au frein correspondant, cet ensemble formé du câble et du frein pouvant être assimilé à un ressort qu'il s'agit de comprimer. En phase de desserrage, l'énergie que doit fournir ce moteur est nettement plus réduite, dans la mesure où l'ensemble composé du câble et du frein restitue de l'énergie.

On notera également que la phase de serrage évoquée ci-dessus s'accompagne de la fourniture d'un couple particulièrement élevé. Ceci conditionne le rapport de démultiplication qu'il convient d'utiliser dans le réducteur, ainsi que la puissance du moteur électrique. Cependant, ce serrage ne nécessite pas une rapidité particulière, puisqu'il peut être mis en oeuvre en une seconde ou plus.

En revanche, la phase de desserrage précitée ne nécessite que peu de couple, puisque l'énergie emmagasinée dans les câbles et les freins participe largement à cette opération. Cependant, un tel desserrage doit être mis en oeuvre de façon nettement plus rapide que le serrage, en une durée inférieure à une seconde. On notera à cet égard que le réducteur généralement employé ne permet pas nécessairement d'atteindre une dynamique de desserrage suffisante.

Ceci étant précisé, l'invention vise à optimiser le fonctionnement, en termes énergétiques, d'un dispositif électrique de freinage de stationnement du type précité, en particulier dans les phases respectives de serrage et de desserrage décrites ci-dessus.

A cet effet, elle a pour objet un dispositif électrique de freinage de stationnement pour véhicule automobile, comprenant :

- un organe d'actionnement d'au moins un câble de commande d'au moins un frein de ce véhicule, et
- un moteur électrique d'entraînement en translation de cet organe d'actionnement, selon deux sens opposés correspondant respectivement à une mise en tension et à une détente du ou de chaque câble, caractérisé en ce que ce dispositif comprend en outre des moyens de fourniture d'énergie, propres à fournir de l'énergie à l'organe d'actionnement lors de la phase de mise en tension.

Selon d'autres caractéristiques de l'invention :

- les moyens de fourniture d'énergie sont propres à accumuler de l'énergie lors de la phase de détente ;
- les moyens de fourniture d'énergie sont des moyens élastiques de fourniture d'énergie ;
- les moyens élastiques de fourniture d'énergie comprennent au moins un ressort précontraint reliant l'organe d'actionnement et un point fixe du véhicule, le ou chaque ressort étant propre à s'allonger lors d'au moins une partie de la phase de mise en tension du ou de chaque câble, de manière à fournir de l'énergie ;
- il est prévu au moins un ressort précontraint, dit ressort oblique, s'étendant de façon oblique par rapport à la direction de déplacement de l'organe d'actionnement ;
- il est prévu au moins un ressort précontraint dit ressort axial, s'étendant selon l'axe principal de déplacement de l'organe d'actionnement ;
- au moins un ressort précontraint est comprimé au moins dans une position desserrée du dispositif, dans laquelle le ou chaque câble est détendu ;
- il est prévu au moins un ressort axial précontraint et au moins un ressort auxiliaire précontraint, s'étendant de façon oblique, le ou chaque ressort auxiliaire précontraint se trouvant comprimé au moins en un point intermédiaire du déplacement de l'organe d'actionnement ;
- il est prévu au moins un ressort auxiliaire d'un premier côté de l'organe d'actionnement, ainsi qu'au moins un autre ressort auxiliaire de l'autre côté de l'organe d'actionnement ;
- au moins dans une position serrée du dispositif, dans laquelle le ou chaque câble est mis en tension de façon maximale, le ou chaque ressort axial n'est plus comprimé ;
- le ou chaque ressort précontraint est relié à ses deux extrémités, par des liaisons pivot, respectivement avec l'organe d'actionnement et avec un carter du dispositif électrique de freinage de stationnement.

L'invention a également pour objet un véhicule automobile comprenant au moins un dispositif électrique de freinage de stationnement, tel que défini ci-dessus.

L'invention va être décrite ci-après, en référence aux dessins annexés, donnés uniquement à titre d'exemples non limitatifs, dans lesquels :

- la figure 1 est une vue en perspective, illustrant un premier exemple de réalisation d'un dispositif électrique de freinage de stationnement conforme à l'invention, en position desserrée ;
- la figure 2 est une vue schématique, illustrant ce dispositif électrique de freinage de stationnement dans sa position desserrée de la figure 1 ;
- la figure 3 est une vue schématique, analogue à la figure 2, illustrant le dispositif électrique de freinage de stationnement des figures 1 et 2, dans sa position serrée ;
- la figure 4 est un graphe, illustrant les différentes forces appliquées lors du passage du dispositif électrique de freinage de stationnement, illustré aux figures 1 à 3, depuis sa position desserrée vers sa position serrée ;
- la figure 5 est une vue schématique, analogue aux figures 2 et 3, illustrant un second mode de réalisation d'un dispositif électrique de freinage de stationnement conforme à l'invention, dans sa position desserrée ;
- la figure 6 est une vue schématique, analogue à la figure 5, illustrant le dispositif électrique de freinage de stationnement de la figure 5, dans sa position serrée ;
- les figures 7 et 8 sont des graphes, analogues à la figure 4, illustrant différentes forces appliquées lors du passage du dispositif électrique de freinage de stationnement, illustrés aux figures 5 et 6, depuis sa position desserrée vers sa position serrée ;
- la figure 9 est un graphe, analogue à la figure 8, illustrant la variation des forces appliquées lors de variations de la tension initiale des câbles appartenant à ce dispositif ; et
- les figures 10 et 11 sont des vues schématiques, analogues notamment aux figures 2 et 3, illustrant deux variantes supplémentaires de réalisation d'un dispositif électrique de freinage de stationnement conforme à l'invention, dans sa position desserrée.

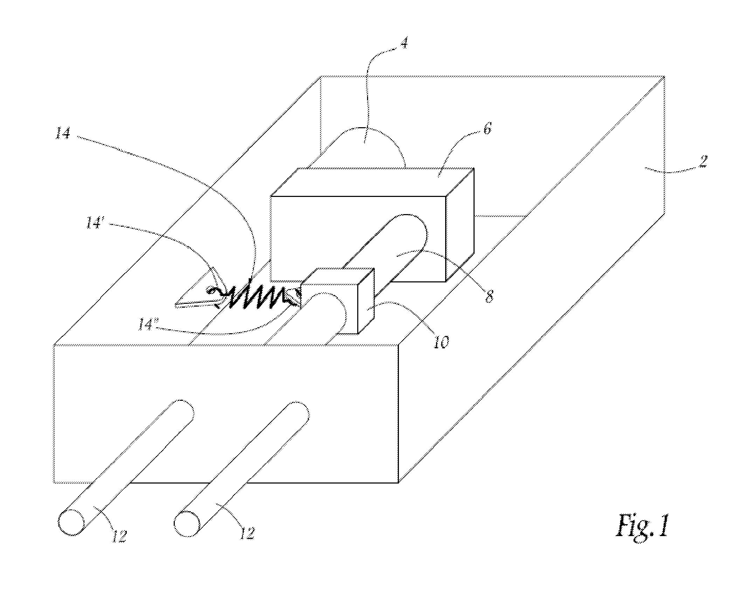

La figure 1 illustre un premier exemple de réalisation d'un dispositif électrique de freinage de stationnement conforme à l'invention, dans sa position desserrée. Ce dispositif comprend, de manière connue en soi, un carter 2, illustré partiellement, dans lequel sont reçus un moteur électrique 4, un réducteur 6, une vis sans fin 8, ainsi qu'un écrou 10. Ce dernier est propre à actionner deux câbles 12, dont chacun est relié à un frein correspondant, non représenté, appartenant au véhicule automobile équipé du dispositif de l'invention.

De façon classique, comme l'indique la figure 2, lorsque le moteur 4 est actionné, il entraîne en rotation la vis 8, selon la flèche $f_1$. Cette dernière contribue alors au déplacement en translation de l'écrou 10, selon la flèche $f_2$, ce qui a pour effet d'actionner les câbles 12.

Le dispositif de l'invention comporte également un ressort précontraint 14, reliant le carter 2 et l'écrou 10. On notera que la liaison existant entre chaque extrémité 14' ou 14" du ressort 14 et ce carter ou cet écrou, est de type pivot. A cet effet, on peut prévoir tout moyen approprié, en vue de la réalisation d'une telle liaison.

La figure 2 illustre de manière schématique, vu de face, le dispositif électrique de la figure 1, à savoir dans sa position desserrée. On note X-X' l'axe principal de la vis 8, qui correspond également à la direction de déplacement de l'écrou.

Sur cette figure 2, chaque câble 12, associé à une gaine de frein correspondante, ainsi qu'à un récepteur de freinage, tel un frein à disque ou à tambour, est représenté sous la forme d'un ressort. Par ailleurs, le ressort 14, illustré sur la figure 1, s'étend dans cette position desserrée de façon perpendiculaire à l'axe principal X-X'. On notera également que ce ressort 14 se trouve comprimé, dans cette position desserrée.

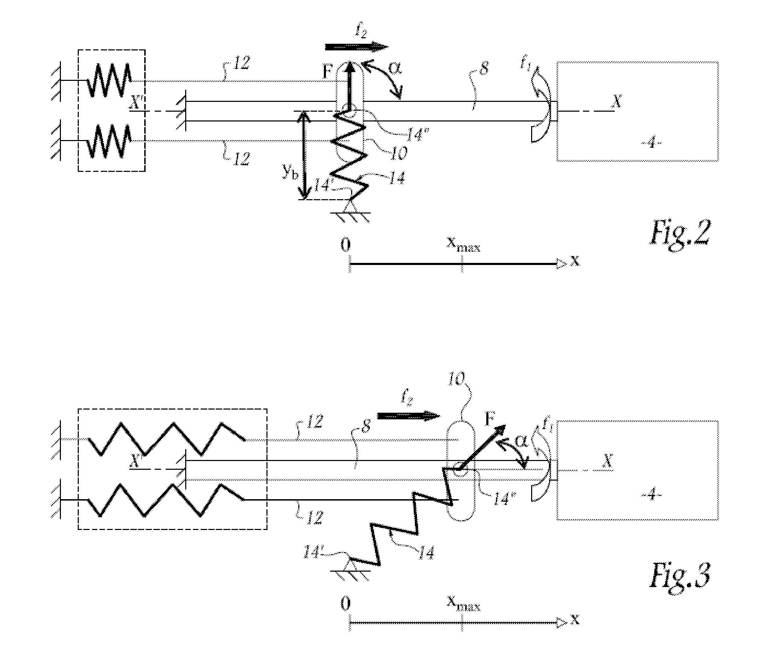

Lors du serrage, comme on l'a vu ci-dessus, le moteur 4 entraîne, via la vis 8, l'écrou 10 en translation selon l'axe X-X', à savoir vers la droite des figures 2 et 3. Etant donné que le ressort précontraint 14 est comprimé, dans la position de la figure 2, il contribue à assister le moteur 4 afin de déplacer l'écrou 10 vers la droite. Ainsi, à la figure 3, c'est-à-dire à l'issue de la phase de serrage, le ressort 14 a basculé vers la droite et s'est allongé, à savoir qu'il a fourni de l'énergie à l'écrou 10.

De façon plus précise, comme le montrent les figures 2 et 3, on note $\alpha$ l'angle de la droite d'action du ressort 14 avec l'axe principal de la vis. On note $y_b$ la distance entre l'extrémité 14' de ce ressort et l'écrou, $K$ la raideur et $F_0$ la précharge de ce ressort.

L'axe des abscisses est également présent sur ces figures 2 et 3, $x$=0 correspondant à la position de l'extrémité 14', alors que $x_{max}$ correspond à la position de l'extrémité 14'' en position finale serrée. On note $F(x)$ la force fournie par le ressort en fonction de la valeur de $x$, ainsi que $F_x(x)$ la valeur de cette force selon l'axe des abscisses.

On a alors

$$F(x) = F_0 - K \times \Delta l = F_0 - K \times \left( \sqrt{x^2 + y_b^2} - y_b \right)$$

$$\cos\alpha(x) = \frac{F_x(x)}{F(x)} = \frac{x}{\sqrt{x^2 + y_b^2}}$$

$$\Rightarrow F_x(x) = \left[ F_0 - K \times \left( \sqrt{x^2 + y_b^2} - y_b \right) \right] \times \frac{x}{\sqrt{x^2 + y_b^2}}$$

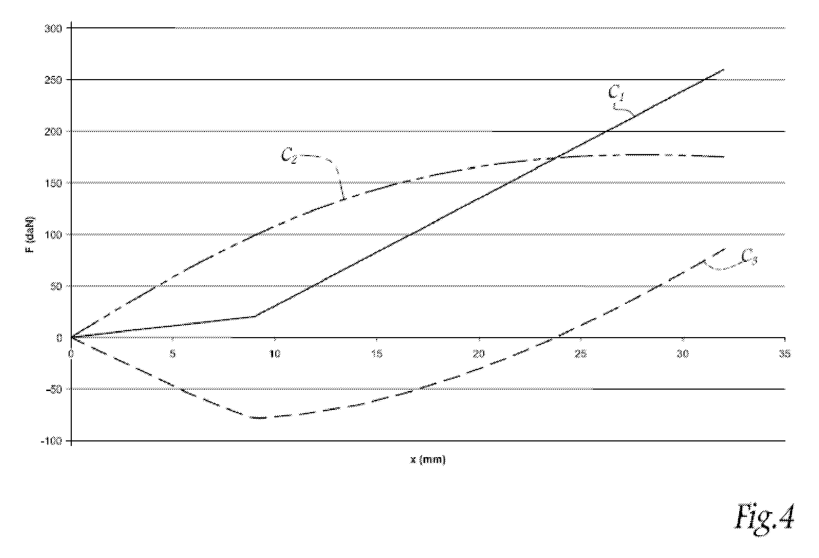

La figure 4 illustre la variation des différentes forces mises en jeu, lors du passage du dispositif depuis sa position desserrée de la figure 2 vers sa position serrée de la figure 3. Ainsi, la courbe $C_1$ correspond à la force totale à fournir aux câbles 12, en fonction de la valeur de **x**. De plus, la courbe $C_2$ correspond à la composante, selon l'axe des **x**, de la force fournie par le ressort 14 en fonction de la valeur de **x**. Dans cette optique, on supposera à titre purement indicatif que ce ressort possède les caractéristiques suivantes :

- précharge : 300 daN
- raideur : 5 daN/mm
- $y_b$ : 25 mm
- longueur minimale en fonctionnement : 25 mm
- longueur maximale en fonctionnement : 40,6 mm
- longueur à vide : 100,6 mm.

Dans ces conditions, la courbe $C_3$ correspond à la différence entre les deux valeurs précitées, à savoir la force qu'il s'agit de fournir aux câbles et celle apportée par le ressort 14. En d'autres termes, cette différence, matérialisée par la courbe $C_3$, correspond à la force effective que doit fournir le moteur 4.

On constate que, lors de l'ensemble de la phase de serrage, correspondant au passage de la position de la figure 2 à celle de la figure 3, la valeur fournie par le moteur 4 est nettement inférieure à la force qui doit être apportée aux câbles 12, qui correspondrait à la force à apporter par le moteur 4 en l'absence du ressort 14. Par conséquent, la présence de ce ressort 14 permet de solliciter le moteur 4 dans une mesure réduite, ce qui est particulièrement avantageux, notamment en termes de dimensionnement de ce moteur ou en termes de dimensionnement du réducteur, ce qui permettrait d'augmenter la dynamique d'actionnement du système (desserrage dans une durée plus faible, par exemple).

De plus, le fait que le ressort 14 est perpendiculaire à l'axe principal de la vis 8 dans la position desserrée des figures 1 et 2, présente des avantages spécifiques. En effet, grâce à cet agencement, ce ressort ne génère sensiblement aucun effort sur l'écrou 10, susceptible de faire se déplacer ce dernier, puisqu'il n'y a pas de composante d'effort selon l'axe principal de la vis. De ce fait, l'ensemble du dispositif peut subir un environnement vibratoire, sans cependant induire un déplacement de l'écrou 10.

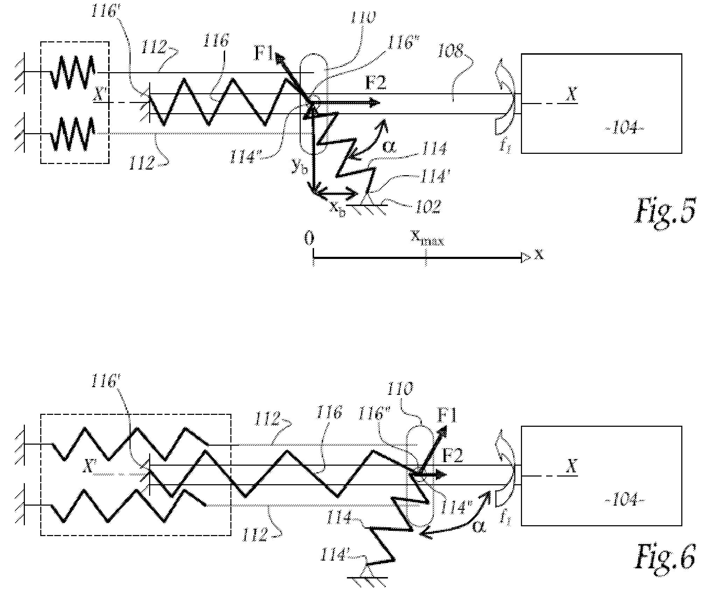

Les figures 5 et 6 illustrent un dispositif électrique de freinage de stationnement conforme à un second mode de réalisation de l'invention. Sur ces figures, les éléments mécaniques analogues à ceux des figures 1 à 3 y sont affectés des mêmes numéros de référence, augmentés de 100.

On retrouve tout d'abord un premier ressort précontraint 114, s'étendant de manière oblique par rapport à l'axe principal X-X' de la vis 108. Cependant, à la différence du ressort 14 de la figure 1, ce ressort 114 n'est pas perpendiculaire à cet axe principal dans la position desserrée, illustrée dans la figure 5. Ainsi, dans cet agencement, son extrémité 114', adjacente au carter 102, est plus proche du moteur 104 que son autre extrémité 114'', selon l'axe des x.

Il est également prévu un second ressort précontraint, affecté de la référence 116, qui s'étend selon l'axe principal X-X', en étant enroulé autour de la vis 108. La première extrémité 116' de ce ressort 116 est liée à cette vis 108, ou à tout autre point fixe, tel que par exemple le carter, alors que sa seconde extrémité 116'' est liée à l'écrou 110. Les liaisons correspondantes sont par exemple de type pivot, comme dans le premier mode de réalisation.

On notera par ailleurs que, au moins dans la position desserrée, le ressort 116, dit axial par opposition au ressort 114 oblique, se trouve comprimé. Par conséquent, lors du serrage du dispositif électrique de freinage de stationnement, le moteur 102 entraîne l'écrou 110 vers la droite, de sorte que ce ressort axial 116 s'allonge. Etant donné la précontrainte qui lui est appliquée, ce ressort 116 contribue donc à assister le moteur durant la phase de serrage, à l'issue de laquelle le dispositif se trouve dans la configuration de la figure 6.

Par ailleurs, lors du passage entre les états respectivement desserré et serré, l'extrémité 114'' du ressort oblique 114 se trouve entraînée vers la droite, à savoir qu'elle bascule autour de l'autre extrémité 114'. Dans ces conditions, ce ressort oblique 114 est tout d'abord comprimé, jusqu'à ce que son extrémité 114'' passe au droit de l'extrémité 114', puis subit un allongement après ce basculement.

En termes énergétiques, le ressort axial 116 fournit de l'énergie durant l'ensemble de la phase de serrage, selon une valeur décroissante au fur et à mesure de son allongement. Par ailleurs, le ressort oblique 114 consomme tout d'abord de l'énergie lors de sa compression, avant de basculer autour de la verticale, puis de restituer cette énergie après ce basculement. De façon inverse, lors du desserrage, correspondant au passage du dispositif depuis l'agencement de la figure 6 vers celui de la figure 5, les câbles et les freins fournissent de l'énergie aux deux ressorts 114 et 116.

De façon plus précise, on note $\alpha$ l'angle de la droite d'action du ressort 114 avec la vis, $(x_b;y_b)$ les coordonnées du point de pivot, correspondant au basculement du ressort, $F1_0$ et $K_1$ la précharge et la raideur de ce ressort.

On a alors

$$F1(x) = F1_0 + K1 \times \Delta l1 = F1_0 + K1 \times \left( \sqrt{x_b^2 + y_b^2} - \sqrt{(x_b - x)^2 + y_b^2} \right)$$

$$\cos\alpha(x) = \frac{F1_x(x)}{F1(x)} = \frac{x_b - x}{\sqrt{(x_b - x)^2 + Y_b^2}}$$

$$\Rightarrow F1_x(x) = \left[ F1_0 + K1 \times \left( \sqrt{x_b^2 + y_b^2} - y_b - \sqrt{(x_b - x)^2 + y_b^2} \right) \right] \times \frac{x_b - x}{\sqrt{(x_b - x)^2 + y_b^2}}$$

Comme dans le premier mode de réalisation, $F1(x)$ correspond à la force fournie par le ressort en fonction de la valeur de $x$, alors que $F1_x(x)$ correspond à la valeur de cette force selon l'axe des abscisses.

De plus, on note $F2_0$ et $K2$ la précharge et la raideur du ressort 116. La force $F2(x)$ fournie par ce ressort en fonction de la valeur de $x$ est alors égale à :

$$F2(x) = F2_0 + K2 \times \Delta l2 = F2_0 - K2 \times x$$

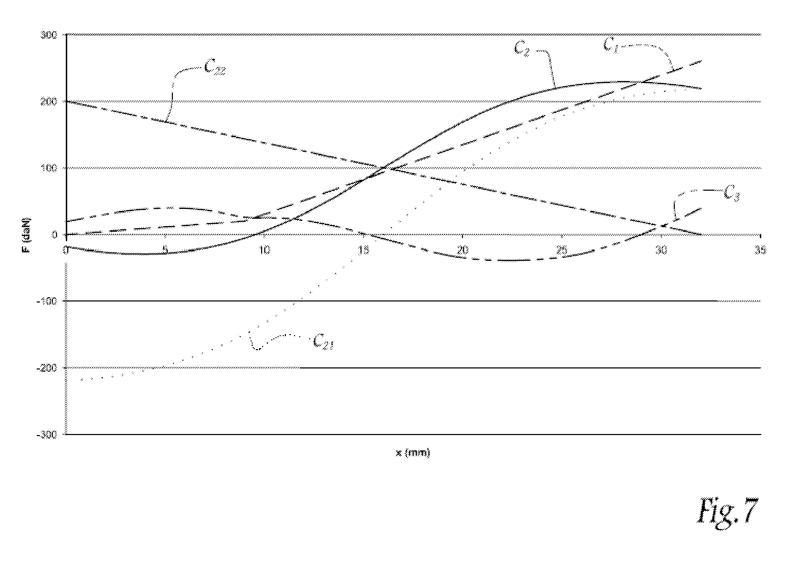

La figure 7 illustre la variation des différentes forces mises en jeu, lors du passage du dispositif depuis sa position desserrée de la figure 5 vers sa position serrée de la figure 6.

Ainsi, la courbe $C_1$ correspond à la force totale à fournir aux câbles 112, en fonction de la valeur de $x$. De plus, les courbes $C_{21}$ et $C_{22}$ correspondent, d'une part, à la composante selon l'axe des $x$ de la force fournie par le ressort 114 et, d'autre part, à la force fournie par le ressort 116.

Dans cette optique, on supposera à titre purement indicatif que le ressort oblique 114 possède les caractéristiques suivantes :

- précharge : 300 daN
- raideur : 10 daN/mm
- $x_b;y_b$ : (16,15) mm
- longueur minimale en fonctionnement : 15 mm
- longueur maximale en fonctionnement : 21,9 mm
- longueur à vide : 51,9 mm.

Par ailleurs, on supposera à titre purement indicatif que le ressort axial 116 possède les caractéristiques suivantes :

- précharge : 200 daN
- raideur : 6,25 daN/mm
- longueur minimale en fonctionnement : 32 mm
- longueur maximale en fonctionnement : 64 mm
- longueur à vide : 64 mm.

Dans ces conditions, la courbe $C_2$ correspond à la somme des forces fournies par les deux ressorts 114 et 116, alors que la courbe $C_3$ correspond à la différence entre la force qu'il s'agit de fournir aux câbles, matérialisée par la courbe $C_1$, et la force apportée par les ressorts 114 et 116, matérialisée par la courbe $C_2$. En d'autres termes, cette différence matérialisée par la courbe $C_3$ correspond à la force effective, qui doit être apportée par le moteur 104 lors de la phase de serrage.

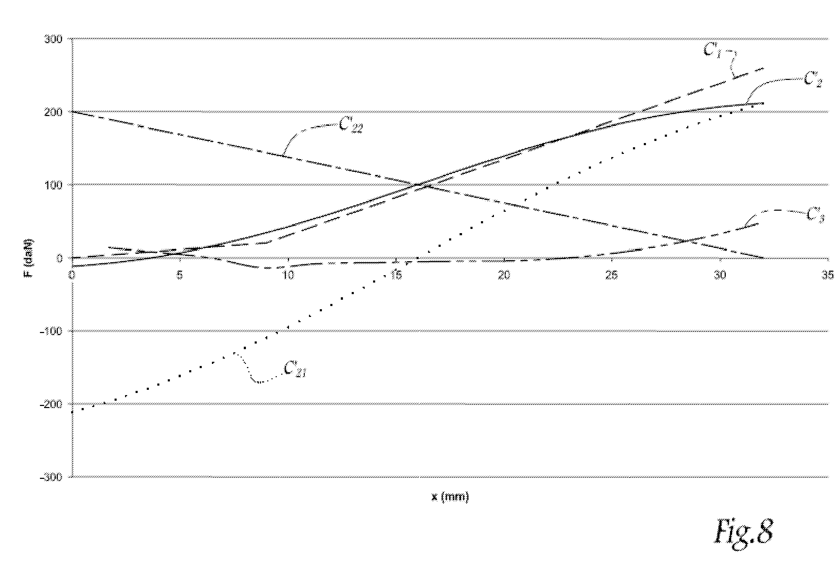

La figure 8, analogue à la figure 7 présentée ci-dessus, diffère de cette dernière en ce qui concerne certaines caractéristiques conférées au ressort oblique 114. Ainsi, dans cet exemple, ce dernier possède les caractéristiques suivantes :

- précharge : 450 daN
- raideur : 10 daN/mm
- $x_b;y_b$ : (16,30) mm
- longueur minimale en fonctionnement : 30 mm
- longueur maximale en fonctionnement : 34 mm
- longueur à vide : 79 mm.

Par ailleurs, les caractéristiques du ressort axial 116 sont inchangées. Dans ces conditions, les courbes $C'_1$, $C'_{21}$, $C'_{22}$, $C'_2$ et $C'_3$ correspondent respectivement aux courbes $C_1$, $C_{21}$, $C_{22}$, $C_2$ et $C_3$ explicitées ci-dessus.

On constate que, lors de l'ensemble de la phase de serrage, correspondant au passage depuis la position de la figure 5 vers celle de la figure 6, la valeur fournie par le moteur 104 est nettement inférieure à la force qui doit être apportée aux câbles 112. Par conséquent, la présence des deux ressorts 114 et 116 autorise une réduction sensible de la puissance fournie par le moteur, ce qui est avantageux notamment en termes énergétiques.

Il est à noter que, au début de la phase de serrage, le ressort axial 116 fournit une énergie importante, alors que le ressort oblique consomme de l'énergie. Ceci est avantageux, dans la mesure où la somme algébrique des valeurs correspondantes est proche de l'énergie qui doit être fournie aux câbles, qui est relativement faible au début de cette phase de serrage.

En outre, après le basculement du ressort oblique 114, ce dernier fournit alors de l'énergie, tout comme le ressort axial 116. Par conséquent, l'énergie totale apportée par ces deux ressorts est nettement plus importante qu'au début du serrage, ce qui est avantageux puisque, à la fin de cette opération, il est nécessaire de fournir une énergie plus importante aux câbles.

Dans les deux exemples présentés ci-dessus, en référence aux figures 7 et 8, le ressort axial retrouve sa longueur à vide à l'issue de la phase de serrage. En effet, il est avantageux que ce ressort axial ne soit plus comprimé à ce stade, ce qui lui permet de libérer toute l'énergie qu'il a accumulée au préalable. Néanmoins, à titre de variante, ce ressort axial 116 peut, à la fin de la phase de serrage, conserver une réserve d'énergie en étant encore comprimé, ou bien devenir libre, voire résistant, suivant son mode de fixation par rapport à l'écrou 110.

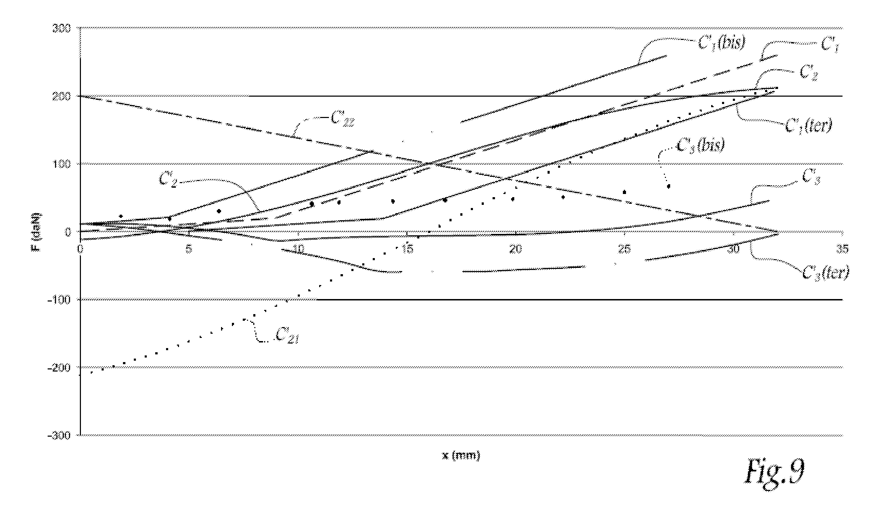

La figure 9 illustre la variation des forces appliquées lors du passage du dispositif des figures 5 et 6 depuis sa position desserrée vers sa position serrée, dans le cas de variations de la tension initiale des câbles appartenant à ce dispositif.

En effet, il est à noter que, lorsque le réglage initial des câbles est imparfait, à savoir qu'il existe un jeu trop important ou au contraire un effort résiduel en position desserrée théorique, ceci présente un impact par rapport aux efforts que doivent fournir les ressorts 114 et 116. En pratique, sur la chaîne de montage, la position de référence peut varier de plusieurs millimètres d'un véhicule à un autre, ce qui est notamment lié aux dispersions de fabrication des câbles, des étriers ou encore des leviers.

On retrouve tout d'abord, sur cette figure 9, les courbes $C'_1$, $C'_{21}$, $C'_{22}$, $C'_2$ et $C'_3$, correspondant à celles explicitées en référence à la figure 8. Par ailleurs, la courbe $C'_1$(bis) correspond à la force totale à fournir aux câbles 112, en fonction de la valeur de *x,* lors d'un décalage de 5 mm par rapport à la position nominale, dans un premier sens. Enfin, la courbe $C'_1$(ter) correspond à la force totale à fournir aux câbles 112 en fonction de la valeur de x, lors d'un décalage de 5 mm par rapport à la position nominale, dans l'autre sens.

Dans ces conditions, étant donné que $C'_{21}$, $C'_{22}$ et $C'_2$ sont inchangées, $C'_3$(bis) correspond à la différence entre la force qu'il s'agit de fournir aux câbles, matérialisée par la courbe $C'_1$(bis), et la force apportée par les ressorts 114 et 116, matérialisée par la courbe $C'_2$. Enfin, la courbe $C'_3$(ter) correspond à la différence entre la force qu'il s'agit de fournir aux câbles, matérialisée par la courbe $C'_1$(ter), et la force apportée par les ressorts 114 et 116, matérialisée par la courbe $C'_2$.

On constate que, même dans le cas où il existe des dispersions, la présence des ressorts 114 et 116 permet de réduire sensiblement l'effort délivré par le moteur. En effet, même si les valeurs absolues des courbes $C'_3$(bis) et $C'_3$ (ter) sont le plus souvent supérieures à celles de la courbe $C'_3$, elles restent notablement inférieures à celles de la courbe $C'_1$, correspondant à la force totale à fournir aux câbles.

A cet égard, on notera qu'il est avantageux d'équiper le dispositif de freinage de stationnement électrique conforme à l'invention, d'un dispositif additionnel de réglage initial de la tension des câbles. Un tel dispositif de réglage, comprenant par exemple un système à vis et écrou permettant d'éloigner la gaine du carter, est connu de l'homme du métier.

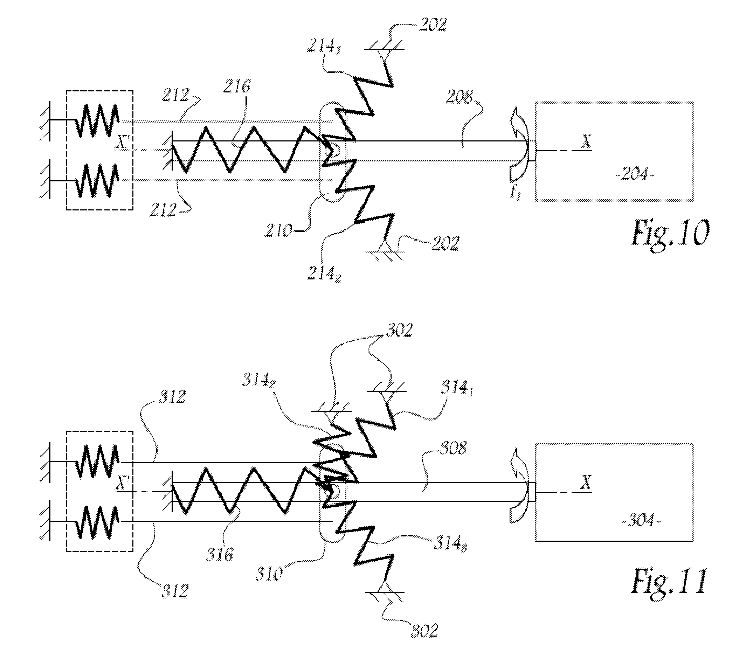

La figure 10 illustre un dispositif électrique de freinage de stationnement conforme à un troisième mode de réalisation de l'invention. Sur cette figure les éléments mécaniques analogues à ceux des figures 5 et 6 y sont affectés des mêmes numéros de référence, augmentés de 100.

Sur cette figure 10, on retrouve tout d'abord un ressort axial 216, analogue à celui 116 des figures 5 et 6. Il est également prévu deux ressorts obliques $214_1$ et $214_2$, dont chacun est analogue à celui 114 des figures 5 et 6. Ces deux ressorts obliques sont symétriques l'un de l'autre, par rapport à l'axe principal X-X' de la vis 208.

Cet agencement, qui induit un fonctionnement analogue à celui explicité ci-dessus, présente des avantages spécifiques. En effet, prévoir deux ressorts obliques disposés de part et d'autre de la vis permet de réduire, voire d'annuler la composante de l'effort généré par ces ressorts obliques, suivant la direction perpendiculaire à la figure 10. Ceci permet par conséquent de s'affranchir des frottements dus à cette composante d'effort.

A titre de variante, cette composante perpendiculaire peut être traitée en utilisant une glissière à billes ou à rouleaux, de type connu en soi, au niveau de l'écrou 210. A titre de variante supplémentaire, également non représentée, on peut prévoir plusieurs ressorts, par exemple trois, disposés autour de la vis en étant angulairement répartis de manière régulière, par exemple à 120° les uns par rapport aux autres.

On notera également que le mode de réalisation reproduit à la figure 10 est avantageux, en termes de dimensionnement. En effet, étant donné qu'il est prévu deux ressorts obliques $214_1$ et $214_2$, ces derniers peuvent être de dimensions réduites, en ce qui concerne leur longueur ainsi que leur épaisseur.

La figure 11 illustre un dispositif électrique de freinage de stationnement conforme à un troisième mode de réalisation de l'invention. Sur cette figure 11, les éléments mécaniques analogues à ceux de la figure 10 y sont affectés des mêmes numéros de référence, augmentés de 100.

L'agencement du dispositif de la figure 11 diffère de celui de la figure 10, en ce qu'il est prévu deux ressorts obliques $314_1$ et $314_2$, d'un premier côté de la vis, à savoir au-dessus de celle-ci. En revanche, il est prévu un unique ressort oblique $314_3$ à l'opposé, c'est-à-dire au-dessous de la vis 308.

Le fonctionnement du dispositif électrique de freinage de stationnement, représenté sur cette figure 11, est analogue à celui des dispositifs des figures respectivement 5 et 6, ainsi que 10. On notera que, pour assurer un effet de symétrie par rapport à l'axe principal de la vis, les deux ressorts supérieurs $314_1$ et $314_2$ sont dimensionnés de façon plus réduite que celui $314_3$ prévu en partie inférieure. La variante illustrée sur la figure 11 est donnée à titre purement indicatif, puisqu'on peut prévoir un nombre différent de ressorts de part et d'autre de la vis.


**Revendications**

**1.** Dispositif électrique de freinage de stationnement pour véhicule automobile, comprenant :

- un organe d'actionnement (10 ; 110 ; 210 ; 310) d'au moins un câble de commande (12 ; 112 ; 212 ; 312) d'au moins un frein de ce véhicule, et
- un moteur électrique (4 ; 104 ; 204 ; 304) d'entraînement en translation de cet organe d'actionnement, selon deux sens opposés correspondant respectivement à une mise en tension et à une détente du ou de chaque câble, **caractérisé en ce que** ce dispositif comprend en outre des moyens (14 ; 114, 116 ; $214_1$, $214_2$, 216 ; $314_1$, $314_2$, $314_3$, 316) de fourniture d'énergie, propres à fournir de l'énergie à l'organe d'actionnement (10 ; 110 ; 210 ; 310) lors de la phase de mise en tension.

**2.** Dispositif selon la revendication 1, **caractérisé en ce que** les moyens de fourniture d'énergie (14 ; 114, 116 ; $214_1$, $214_2$, 216 ; $314_1$, $314_2$, $314_3$, 316) sont propres à accumuler de l'énergie lors de la phase de détente.

**3.** Dispositif selon la revendication 1 ou 2, **caractérisé en ce que** les moyens de fourniture d'énergie sont des moyens élastiques de fourniture d'énergie (14 ; 114, 116 ; $214_1$, $214_2$, 216 ; $314_1$, $314_2$, $314_3$, 316).

4. Dispositif selon la revendication 3, **caractérisé en ce que** les moyens élastiques de fourniture d'énergie comprennent au moins un ressort précontraint (14 ; 116 ; 216 ; 316) reliant l'organe d'actionnement (10 ; 110 ; 210 ; 310) et un point fixe (2 ; 102 ; 202 ; 302) du véhicule, le ou chaque ressort étant propre à s'allonger lors d'au moins une partie de la phase de mise en tension du ou de chaque câble, de manière à fournir de l'énergie.

5. Dispositif selon la revendication 4, **caractérisé en ce qu'**il est prévu au moins un ressort précontraint (14), dit ressort oblique, s'étendant de façon oblique par rapport à la direction de déplacement (X-X') de l'organe d'actionnement (10).

6. Dispositif selon la revendication 4 ou 5, **caractérisé en ce qu'**il est prévu au moins un ressort précontraint (116 ; 216 ; 316), dit ressort axial, s'étendant selon l'axe principal de déplacement de l'organe d'actionnement (110 ; 210 ; 310).

7. Dispositif selon les revendications 4 à 6, **caractérisé en ce qu'**au moins un ressort précontraint (14 ; 116 ; 216 ; 316) est comprimé au moins dans une position desserrée du dispositif, dans laquelle le ou chaque câble est détendu.

8. Dispositif selon l'une des revendications 6 ou 7, **caractérisé en ce qu'**il est prévu au moins un ressort axial précontraint (116 ; 216 ; 316) et au moins un ressort auxiliaire précontraint (114 ; $214_1$, $214_2$ ; $314_1$, $314_2$, $314_3$), s'étendant de façon oblique, le ou chaque ressort auxiliaire précontraint se trouvant comprimé au moins en un point intermédiaire ($x_b$) du déplacement de l'organe d'actionnement.

9. Dispositif selon la revendication 8, **caractérisé en ce qu'**il est prévu au moins un ressort auxiliaire ($214_1$ ; $314_1$, $314_2$) d'un premier côté de l'organe d'actionnement, ainsi qu'au moins un autre ressort auxiliaire ($214_2$ ; $314_3$) de l'autre côté de l'organe d'actionnement.

10. Dispositif selon l'une quelconque des revendications 6 à 9, **caractérisé en ce que**, au moins dans une position serrée du dispositif, dans laquelle le ou chaque câble est mis en tension de façon maximale, le ou chaque ressort axial (116 ; 216 ; 316) n'est plus comprimé.

11. Dispositif selon l'une quelconque des revendications 4 à 10, **caractérisé en ce que** le ou chaque ressort précontraint est relié à ses deux extrémités, par des liaisons pivot, respectivement avec l'organe d'actionnement (10 ; 110 ; 210 ; 310) et avec un carter (2 ; 102 ; 202 ; 302) du dispositif électrique de freinage de stationnement.

12. Véhicule automobile comprenant un dispositif électrique de freinage de stationnement conforme à l'une quelconque des revendications précédentes.

EP 1 726 500 A1

*Fig.1*

*Fig.2*

*Fig.3*

Fig.4

*Fig.5*

*Fig.6*

Fig.7

Fig.8

Fig.9

Fig.10

Fig.11

**Office européen des brevets**

**RAPPORT DE RECHERCHE EUROPEENNE**

Numéro de la demande

EP 06 30 0467

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 41 29 919 A1 (BAYERISCHE MOTOREN WERKE AG, 8000 MUENCHEN, DE; BAYERISCHE MOTOREN WER) 11 mars 1993 (1993-03-11) * colonne 4, ligne 2 - ligne 66; figure 1 * | 1,12 | INV. B60T13/74 B60T7/10 B60T11/04 |
| A | US 2002/108816 A1 (TANIGUCHI MAKOTO) 15 août 2002 (2002-08-15) * abrégé; figure 3 * | 1,12 | |
| A | GB 986 382 A (COUNTY COMMERCIAL CARS LIMITED) 17 mars 1965 (1965-03-17) * page 2, colonne de gauche, ligne 35 - page 2, colonne de droite, ligne 83; figure 1 * | 1,12 | |
| A | DE 11 96 971 B (HANS O. SCHROETER) 15 juillet 1965 (1965-07-15) * colonne 4, ligne 26 - ligne 68; figures 1,2 * | 1,12 | |
| A | DE 31 15 629 A1 (EISENWERK GRUEMER GMBH & CO KG) 4 novembre 1982 (1982-11-04) * page 9, alinéa 2 - page 10, dernière ligne ; figures 1,2 * | 1,12 | DOMAINES TECHNIQUES RECHERCHES (IPC) B60T |

Le présent rapport a été établi pour toutes les revendications

| Lieu de la recherche | Date d'achèvement de la recherche | Examinateur |
|---|---|---|
| Berlin | 24 août 2006 | Ferro Pozo, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 30 0467

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-08-2006

| Document brevet cité au rapport de recherche | | Date de publication | Membre(s) de la famille de brevet(s) | | Date de publication |
|---|---|---|---|---|---|
| DE 4129919 | A1 | 11-03-1993 | AUCUN | | |
| US 2002108816 | A1 | 15-08-2002 | JP | 2002242968 A | 28-08-2002 |
| GB 986382 | A | 17-03-1965 | AUCUN | | |
| DE 1196971 | B | 15-07-1965 | AUCUN | | |
| DE 3115629 | A1 | 04-11-1982 | FR | 2504223 A1 | 22-10-1982 |
| | | | NL | 8201182 A | 16-11-1982 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2848970 A